# EUROPEAN PATENT APPLICATION

(11) **EP 4 734 164 A1**
(43) Date of publication of application: **29.04.2026**
(21) Application number: 24829843.2
(22) Date of filing: 20.02.2024
(51) Int. Cl.: H01M 4/13, H01M 4/62, H01M 10/0525

(54) **NEGATIVE ELECTRODE SHEET, CELL, BATTERY AND ELECTRIC DEVICE**

(30) Priority: 30.06.2023 CN 202310796969
(71) Applicant: Contemporary Amperex Technology Co., Limited, Ningde, Fujian 352100 (CN)
(72) Inventor: WU, Kai, Ningde, Fujian 352100 (CN); ZHAO, Jinling, Ningde, Fujian 352100 (CN); ZHUANG, Zaiyu, Ningde, Fujian 352100 (CN); ZHANG, Ming, Ningde, Fujian 352100 (CN)
(74) Representative: Ziebig Hengelhaupt Intellectual Property Attorneys Patentanwaltskanzlei PartGmbB
(86) International application number: PCT/CN2024/077680
(87) International publication number: WO 2025/001184

(57) **Abstract**

Embodiments of this application provide a negative electrode plate, a battery cell, a battery, and an electric apparatus. The negative electrode plate includes a negative electrode current collector and a negative electrode film layer disposed on at least one side of the negative electrode current collector; where the negative electrode film layer includes a negative electrode active material and a binder, the negative electrode active material includes a silicon-based material, and the binder includes at least one of the following functional groups: hydroxyl, carboxyl, amino, cyano, ester, or vinyl. The technical solution of this application can improve cohesion and adhesion of the negative electrode plate, reducing powder shedding and demolding during production, thereby enhancing cycling performance of the battery.

## Description

### CROSS-REFERENCE TO RELATED APPLICATIONS

This application claims priority to the Chinese Patent Application No. 202310796969.3, filed with the China National Intellectual Property Administration on June 30, 2023 and entitled "NEGATIVE ELECTRODE PLATE, BATTERY CELL, BATTERY, AND ELECTRIC APPARATUS", which is incorporated herein by reference in its entirety.

### TECHNICAL FIELD

This application relates to the field of battery technology, and more specifically, to a negative electrode plate, a battery cell, a battery, and an electric apparatus.

### BACKGROUND

In recent years, lithium-ion batteries have been increasingly applied to a wide range of fields, including energy storage power fields such as wind power, hydropower, thermal power, and solar power plants, as well as various fields such as electric bicycles, electric motorcycles, electric vehicles, military equipment, and aerospace. While lithium-ion batteries have achieved significant development, higher requirements have been placed on their performance in various aspects.

Therefore, how cycling performance of lithium-ion batteries is improved is an urgent issue to be addressed.

### SUMMARY

This application has been made in view of the above issues, with the aim of providing a negative electrode plate, a battery cell, a battery, and an electric apparatus to improve cycling performance of the battery.

According to a first aspect, a negative electrode plate is provided, including a negative electrode current collector and a negative electrode film layer disposed on at least one side of the negative electrode current collector; where the negative electrode film layer includes a negative electrode active material and a binder, the negative electrode active material includes a silicon-based material, and the binder includes at least one of the following functional groups: hydroxyl, carboxyl, amino, cyano, ester, or vinyl.

In embodiments of this application, the negative electrode plate includes a negative electrode film layer; and the negative electrode film layer includes a negative electrode active material and a binder, where the negative electrode active material includes a silicon-based material, and the binder includes at least one functional group selected from hydroxyl, carboxyl, amino, cyano, ester, or vinyl. With the silicon-based material and the binder added into the negative electrode film layer, on one hand, the silicon-based material has a high theoretical specific capacity, which is beneficial for increasing the energy density of the battery; on the other hand, the silicon-based material is relatively hard, less likely to be crushed during cold pressing, and has irregular particle shapes with certain gaps between particles, resulting in a relatively high porosity for the negative electrode plate containing the silicon-based material. The binder including at least one functional group selected from hydroxyl, carboxyl, amino, cyano, ester, or vinyl has good adhesion. Adding a binder with good adhesion to the negative electrode film layer allows the binder to fill the large pores of the silicon-based material, thereby improving the cohesion within the negative electrode plate and the adhesion between the negative electrode film layer and the negative electrode current collector. This suppresses the severe volume swelling of the silicon-based material during battery cycling and reduces demolding and powder shedding in the negative electrode plate, thereby enhancing the cycling performance of the battery.

In a possible implementation, a median particle size by volume Dᵥ50 of the binder is 0.1 µm to 0.8 µm; optionally, the volume-based median particle size Dᵥ50 of the binder is 0.3 µm to 0.7 µm; optionally, the median particle size by volume Dᵥ50 of the binder is 0.35 µm to 0.45 µm.

In the embodiments of this application, to improve the adhesion and cohesion of the negative electrode plate and mitigate demolding and powder shedding, a binder containing at least one functional group selected from hydroxyl, carboxyl, amino, cyano, ester, or vinyl is added to the negative electrode film layer to fill the large gaps in the silicon-based material. Additionally, with the median particle size by volume Dᵥ50 of the binder set to 0.1 µm to 0.8 µm, further to 0.3 µm to 0.7 µm, and even further to 0.35 µm to 0.45 µm, a binder with a moderate particle size can fill the larger gaps in the silicon-based material, enhancing the cohesion between negative electrode active materials and the adhesion between the negative electrode active material and the negative electrode current collector. This further reduces demolding and powder shedding in the electrode plate and improves the cycling stability of the battery.

In a possible implementation, a median particle size by volume Dᵥ50 of the binder is 0.5 µm to 0.7 µm.

In the embodiments of this application, to improve the adhesion of the negative electrode plate and mitigate demolding and powder shedding, a binder containing at least one functional group selected from hydroxyl, carboxyl, amino, cyano, ester, or vinyl is added to the negative electrode film layer to fill the large gaps in the silicon-based material. Further, the median particle size by volume Dᵥ50 of the binder is set to 0.5 µm to 0.7 µm, which can also enhance the adhesion within the negative electrode plate, reduce demolding and powder shedding in the electrode plate, and improve the cycling stability of the battery.

In a possible implementation, a degree of crosslinking of the binder is 50 to 100, and optionally, the degree of crosslinking of the binder is 80 to 98.

In the embodiments of this application, if the binder has a relatively high degree of crosslinking, it absorbs less electrolyte, resulting in slower film formation of the negative electrode film layer slurry and higher strength of the binder. Therefore, maintaining the degree of crosslinking of the binder at 50 to 100, particularly at 80 to 98, can enhance the strength and electrolyte resistance of the binder. Maintaining high binder strength helps suppress the swelling of the negative electrode and improve the bonding strength between active materials in the negative electrode plate, thereby reducing the likelihood of powder shedding and demolding in the negative electrode plate.

In a possible implementation, a swelling rate of the binder is 5% to 80%, and optionally, the swelling rate of the binder is 10% to 50%.

In the embodiments of this application, the binder typically exhibits swelling. If the swelling exceeds a certain level, the conductivity and adhesion between the active material and the current collector are affected, adversely affecting the battery capacity, cycling performance, and the like. Therefore, with the swelling rate of the binder limited to 5% to 80%, particularly to 10% to 50%, a binder with a moderate swelling rate can achieve good adhesion effects, further reducing the likelihood of powder shedding and demolding in the negative electrode plate.

In a possible implementation, a glass transition temperature of the binder is -20°C to 60°C, and optionally, the glass transition temperature of the binder is -10°C to 40°C.

In the embodiments of this application, if the glass transition temperature is too high, the brittleness of the negative electrode plate is affected, leading to demolding and powder shedding of the negative electrode plate during battery cycling. Therefore, maintaining the glass transition temperature of the binder at -20°C to 60°C, particularly at -10°C to 40°C can further reduce the brittleness of the negative electrode plate.

In a possible implementation, an elongation at break of the binder is 50% to 400%, and optionally, the elongation at break of the binder is 100% to 200%.

In embodiments of this application, during the repeated swelling of the negative electrode plate, a binder with a certain elongation at break can suppress the swelling of the negative electrode plate, thereby reducing cracking, powder shedding, or the like in the electrode plate. Setting the elongation at break of the binder to 50% to 400%, particularly 100% to 200%, allows the binder to exhibit strong deformation resistance.

In a possible implementation, based on 100 parts by weight of the negative electrode film layer, a weight portion of the binder is 1 to 10 parts by weight, and optionally, the weight portion of the binder is 2 to 8 parts by weight.

In the embodiments of this application, to reduce demolding and powder shedding in the negative electrode plate, a binder containing specific functional groups is added to the negative electrode film layer to fill the larger pores in the negative electrode active material. Setting the weight proportion of the binder in the negative electrode film layer to 1% to 10%, particularly 4% to 8%, can enhance the adhesion between negative electrode active materials to suppress volume swelling of the negative electrode plate, and can also reduce the decrease in battery energy density caused by excessive binder content.

In a possible implementation, the binder includes at least one of styrene-butadiene and a modified product thereof, styrene-acrylic and a modified product thereof, polyurethane and a modified product thereof, polyvinylidene fluoride and a modified product thereof, or acrylate and a modified product thereof.

In the embodiments of this application, at least one of styrene-butadiene and a modified product thereof, styrene-acrylic and a modified product thereof, polyurethane and a modified product thereof, polyvinylidene fluoride and a modified product thereof, or acrylate and a modified product thereof, which have good adhesion, is used as the binder, helping further improve the adhesion between the negative electrode active material and the negative electrode current collector.

In a possible implementation, the silicon-based material includes at least one of a silicon-oxygen material or a silicon-carbon material; optionally, the silicon-oxygen material includes SiOx, where 0.4≤x≤1.6; and optionally, the silicon-carbon material includes a silicon-carbon composite, and based on a total mass of the silicon-carbon composite, a ratio of a mass proportion B of carbon element to a mass proportion A of silicon element in the silicon-carbon composite is 1.3≤B/A≤2.

In the embodiments of this application, a silicon-based material, particularly a silicon-oxygen material or a silicon-carbon material, is added to the negative electrode active material, helping increase the energy density of the battery. The silicon-oxygen material in the silicon-based material not only has high theoretical capacity and excellent stability but also offers advantages such as low cost, non-toxicity, and environmental friendliness. The silicon-carbon material has relatively high theoretical capacity and good cycling performance. Through the use of a silicon-oxygen material, particularly SiOₓ where 0.4≤x≤1.6, or a silicon-carbon material with a ratio of a mass proportion A of silicon element in the silicon-carbon composite to a mass proportion B of carbon element in the silicon-carbon composite of 1.3≤B/A≤2, the battery performance can be further improved.

In a possible implementation, the negative electrode active material further includes graphite; where based on 100 parts by weight of the negative electrode film layer, a weight portion of graphite is 45 to 70 parts by weight, and optionally, the weight portion of graphite is 55 to 65 parts by weight.

Since the silicon-based material has high theoretical capacity but poor conductivity, if only the silicon-based material is used as the negative electrode active material of the battery, the battery has poor conductivity. In the embodiments of this application, graphite with good conductivity is added to the negative electrode active material, and the weight proportion of graphite in the negative electrode film layer is set to 45% to 70%, particularly 55% to 65%, maintaining good cycling performance for the battery.

In a possible implementation, a compacted density of the negative electrode plate is 1.0 g/cm³ to 2.5 g/cm³, and optionally, the compacted density of the negative electrode plate is 1.2 g/cm³ to 1.8 g/cm³.

In the embodiments of this application, the compacted density of the negative electrode plate is set to 1.0 g/cm³ to 2.5 g/cm³, particularly 1.2 g/cm³ to 1.8 g/cm³, further improving the energy density of the battery.

In a possible implementation, a thickness of the negative electrode plate is 60 µm to 150 µm, and optionally, the thickness of the negative electrode plate is 90 µm to 130 µm.

In the embodiments of this application, the thickness of the negative electrode plate is set to 60 µm to 150 µm, particularly 90 µm to 130 µm, further improving the energy density of the battery.

A second aspect of this application provides a battery cell, including the negative electrode plate according to any one implementation of the first aspect of this application.

In a possible implementation, the battery cell further includes a positive electrode plate, where the positive electrode plate includes a positive electrode current collector and a positive electrode film layer disposed on at least one side of the positive electrode current collector, the positive electrode film layer including a positive electrode active material.

In a possible implementation, the positive electrode active material includes Liₓ(NiₐCo_{b}Mn_{c})_{1-d}M_{d}O_{2-y}A_{y}, where M includes at least one of Zr, Al, B, Ta, Mo, W, Nb, Sb, or La, 0.2<x≤1.2, 0.5≤a<1.0, 0≤b<0.5, 0≤c<1, 0≤d<1, and 0≤y<0.02.

A third aspect of this application provides a battery including the battery cell according to the second aspect of this application.

A fourth aspect of this application provides an electric apparatus including the battery according to the third aspect of this application.

### DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a negative electrode plate according to an embodiment of this application;
FIG. 2 is a schematic diagram of a battery cell according to an embodiment of this application;
FIG. 3 is a schematic structural diagram of a battery cell according to an embodiment of this application;
FIG. 4 is a schematic diagram of a battery according to an embodiment of this application;
FIG. 5 is a schematic structural diagram of a battery according to an embodiment of this application; and
FIG. 6 is a schematic structural diagram of an electric apparatus according to an embodiment of this application.

### DETAILED DESCRIPTION

The following specifically discloses in detail embodiments of the negative electrode plate, battery cell, battery, and electric apparatus of this application. However, unnecessary detailed descriptions may be omitted. For example, detailed descriptions of well-known matters and repeated descriptions of actually identical structures have been omitted. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this manner may include or exclude the endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents an abbreviated representation of any combination of real numbers between a and b, where a and b are both real numbers. For example, a value range of "0-5" means that all real numbers in the range of "0-5" are listed herein, and "0-5" is just an abbreviated representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps in this application can be performed sequentially or randomly, optionally sequentially. For example, if a method includes steps (a) and (b), it means the method may include steps (a) and (b) performed sequentially or steps (b) and (a) performed sequentially. For example, if the method further includes step (c), it means step (c) can be added to the method in any order, for example, the method may include steps (a), (b), and (c), may include steps (a), (c), and (b), may include steps (c), (a), and (b), or the like.

Unless otherwise specified, the terms "include" and "comprise" used in this application are inclusive. For example, the terms "include" and "contain" can mean that other unlisted components may also be included or contained.

The terms "above," "below," "greater than," or "less than" used in this application include the number itself. For example, "at least one" refers to one or more, and "at least one of A and B" refers to "A," "B," or "A and B."

Due to advantages such as high energy density, power, and cycling performance, lithium-ion batteries have been widely used in consumer electronics. In recent years, with the continuous development of electric vehicles and energy storage systems, the requirements for battery cycling performance and other aspects have been increasing.

In the current situation where the capacity of lithium-ion batteries using a graphite-based material as the negative electrode active material can no longer meet the long-range requirements of electric vehicles, silicon-based materials have become the most promising next-generation negative electrode materials for lithium-ion batteries due to their advantages of high specific capacity, low discharge plateau, and abundant reserves. However, silicon-based materials face significant limitations in their commercial application due to their inherent factors. Firstly, silicon-based materials undergo severe volume swelling during battery cycling, and the large volume changes during lithium intercalation and deintercalation can easily lead to particle pulverization and detachment of the active material from the current collector, ultimately resulting in severe powder shedding, demolding, and poor cycling performance of the electrode plate. Therefore, how to reduce powder shedding and demolding in batteries using silicon-based materials to achieve good cycling performance is an urgent issue to be addressed.

In view of this, this application provides a negative electrode plate, where the negative electrode plate includes a negative electrode current collector and a negative electrode film layer disposed on at least one side of the negative electrode current collector. A silicon-based material and a binder are added to a negative electrode active material of the negative electrode film layer, with the binder including at least one functional group selected from hydroxyl, carboxyl, amino, cyano, ester, or vinyl, allowing the binder with relatively good adhesion to fill the large pores of the silicon-based material. This can suppress the poor adhesion between negative electrode active materials caused by severe volume swelling of the silicon-based material during battery cycling, thereby mitigating powder shedding and demolding of the electrode plate and achieving good cycling performance.

The following describes the negative electrode plate, battery cell, battery, and electric apparatus of this application with reference to the accompanying drawings.

Additionally, the technical solutions of this application are applicable to various types of batteries, such as lithium-ion batteries, lithium metal batteries, and sodium-ion batteries, which are not limited in this application. For ease of description, lithium-ion batteries are used as an example for description.

### [Negative electrode plate]

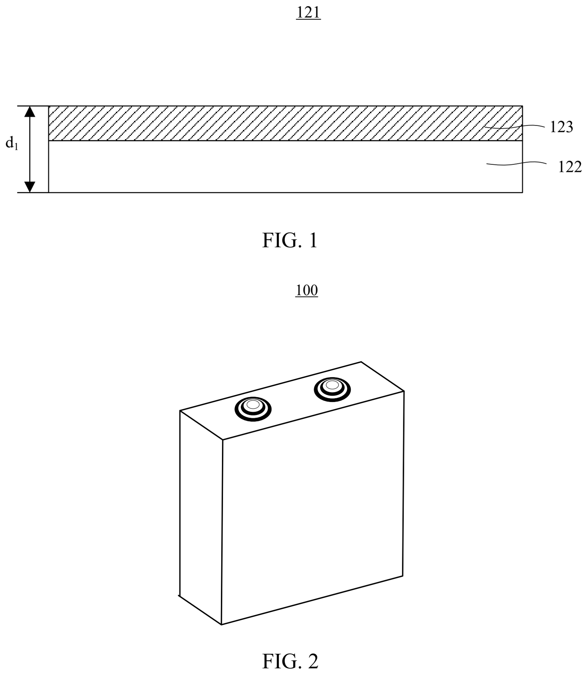

A first aspect of this application provides a negative electrode plate. FIG. 1 is a schematic structural diagram of a negative electrode plate according to an embodiment of this application. As shown in FIG. 1, the negative electrode plate 121 includes a negative electrode current collector 122 and a negative electrode film layer 123 disposed on at least one side of the negative electrode current collector 122; where the negative electrode film layer 123 includes a negative electrode active material and a binder, the negative electrode active material includes a silicon-based material, and the binder includes at least one of the following functional groups: hydroxyl, carboxyl, amino, cyano, ester, or vinyl.

A silicon-based material and a binder are added into the negative electrode film layer 123, with the binder including at least one functional group selected from hydroxyl, carboxyl, amino, cyano, ester, or vinyl, which can improve the adhesion and cohesion of the negative electrode plate and suppress the swelling of the negative electrode plate, thereby enhancing the cycling performance of the battery.

In the embodiments of this application, the silicon-based material refers to a material grown on a silicon material as the substrate or base through different processes, including a silicon-on-insulator material, a silicon-germanium material, porous silicon, microcrystalline silicon, and other compound semiconductor materials heterogeneously epitaxied on a silicon substrate.

In the embodiments of this application, an acrylate compound can be introduced into the binder to make the binder include an ester group; that is, the binder may include an acrylate compound, where the acrylate compound includes at least one of methyl acrylate, ethyl acrylate, n-propyl acrylate, isopropyl acrylate, n-butyl acrylate, tert-butyl acrylate, methyl methacrylate, ethyl methacrylate, n-propyl methacrylate, isopropyl methacrylate, n-butyl methacrylate, or tert-butyl methacrylate.

In the embodiments of this application, a multifunctional vinyl compound can be introduced into the binder to make the binder include a vinyl group. That is, the binder may include a multifunctional vinyl compound, where the multifunctional vinyl compound includes two or more vinyl groups, and the multifunctional vinyl compound includes at least one of divinylbenzene, diethylene glycol di(meth)acrylate, polyethylene glycol di(meth)acrylate, polypropylene glycol di(meth)acrylate, neopentyl glycol di(meth)acrylate, 1,6-hexanediol di(meth)acrylate, or diallyl phthalate.

Typically, a battery cell includes a positive electrode plate, a separator, a negative electrode plate, and an electrolyte. During the charge and discharge process of a battery, active ions are intercalated and deintercalated between the positive and negative electrodes. The electrolyte serves to conduct ions between the positive and negative electrodes, and the separator, disposed between the positive electrode and the negative electrode, primarily prevents short circuits while allowing ions to pass through.

It should be noted that the "positive electrode plate" and "negative electrode plate" mentioned in the embodiments of this application refer to the entire positive electrode plate and negative electrode plate, including an active material, a current collector, or other additives.

The negative electrode plate 121 includes a negative electrode current collector 122 and a negative electrode film layer 123 disposed on at least one surface of the negative electrode current collector 122, the negative electrode film layer 123 including a negative electrode active material.

For example, the negative electrode current collector 122 has two opposite surfaces in its thickness direction, and the negative electrode film layer 123 is disposed on either or both of the two opposite surfaces of the negative electrode current collector 122.

In the above solution, the negative electrode plate 121 includes a negative electrode film layer 123; further, the negative electrode film layer 123 includes a negative electrode active material and a binder; and still further, the negative electrode active material includes a silicon-based material. A median particle size by volume Dᵥ50 of the binder is 0.3 µm to 0.7 µm. With a silicon-based material and a binder added into the negative electrode film layer 123, on one hand, the silicon-based material has a high theoretical specific capacity, which is beneficial for increasing the energy density of the battery; on the other hand, the silicon-based material is relatively hard, less likely to be crushed during cold pressing, and has irregular particle shapes with certain gaps between particles, resulting in a relatively high porosity for the negative electrode plate 121 containing the silicon-based material. The binder including at least one functional group selected from hydroxyl, carboxyl, amino, cyano, ester, or vinyl, has good adhesion. Adding a binder with good adhesion to the negative electrode film layer 123 allows the binder to fill the large pores of the silicon-based material, improving the cohesion within the negative electrode plate 121 and the adhesion between the negative electrode film layer 123 and the negative electrode current collector 122. This suppresses the severe volume swelling of the silicon-based material during battery cycling and reduces demolding and powder shedding in the negative electrode plate, thereby enhancing the cycling performance of the battery.

It should be noted that "demolding" of the electrode plate refers to partial or entire detachment of the negative electrode film layer 123 from the negative electrode current collector 122; and "powder shedding" of the electrode plate refers to the falling off of the negative electrode active material from the negative electrode current collector 122.

In some implementations, a median particle size by volume Dᵥ50 of the binder is 0.1 µm to 0.8 µm; optionally, the volume-based median particle size Dᵥ50 of the binder is 0.3 µm to 0.7 µm; optionally, the median particle size by volume Dᵥ50 of the binder is 0.35 µm to 0.45 µm.

In the above solution, to improve the adhesion of the negative electrode plate 121 and mitigate demolding and powder shedding, a binder including at least one functional group selected from hydroxyl, carboxyl, amino, cyano, ester, or vinyl is added to the negative electrode film layer to fill the large gaps in the silicon-based material. Additionally, with the median particle size by volume Dᵥ50 of the binder set to 0.1 µm to 0.8 µm, further to 0.3 µm to 0.7 µm, and even further to 0.35 µm to 0.45 µm, a binder with a moderate particle size can fill the larger gaps in the silicon-based material, enhancing the adhesion between negative electrode active materials and between the negative electrode active material and the negative electrode current collector 122. This further reduces demolding and powder shedding in the electrode plate and improves the cycling stability of the battery.

It should be noted that the median particle size by volume Dᵥ50 of the binder may be 0.1 µm, 0.3 µm, 0.5 µm, 0.6 µm, or any value within a range defined by these values.

In some implementations, a median particle size by volume Dᵥ50 of the binder is 0.5 µm to 0.7 µm.

In the above solution, to improve the adhesion of the negative electrode plate 121 and mitigate demolding and powder shedding, a binder including at least one functional group selected from hydroxyl, carboxyl, amino, cyano, ester, or vinyl is added to the negative electrode film layer 123 to fill the large gaps in the silicon-based material. Further, the median particle size by volume Dᵥ50 of the binder is set to 0.5 µm to 0.7 µm, which can also enhance the adhesion within the negative electrode plate 121, reduce demolding and powder shedding in the negative electrode plate 121, and improve the cycling stability of the battery.

In some implementations, a degree of crosslinking of the binder is 50 to 100, and optionally, the degree of crosslinking of the binder is 80 to 98.

The degree of crosslinking is an indicator for measuring a polymerization reaction, and the degree of crosslinking significantly affects the binder. A higher degree of crosslinking results in stronger cohesion of the binder. As a result, less liquid, such as the electrolyte in the battery, is absorbed, the film formation is slower, and the binder exhibits higher strength. However, when the degree of crosslinking of the binder is too high, its internal cohesion becomes too strong, which reduces the rheological property of the binder, adversely affecting the fast-charging performance of the battery.

In the above solution, maintaining the degree of crosslinking of the binder at 50 to 100, particularly at 80 to 98, can enhance the strength and electrolyte resistance of the binder. Maintaining high binder strength helps suppress the swelling of the negative electrode and improve the bonding strength between active materials in the negative electrode plate 121, thereby reducing the likelihood of powder shedding and demolding in the negative electrode plate 121.

It should be noted that the degree of crosslinking of the binder may be 50, 60, 80, 90, or any value within a range defined by these values.

In some implementations, a swelling rate of the binder is 5% to 80%, optionally, the swelling rate of the binder is 10% to 50%.

Swelling refers to a phenomenon where a binder experiences volume changes in a liquid. The swelling rate refers to a degree to which a binder expands in a liquid due to absorption of the liquid.

The binder typically exhibits swelling, but if the swelling exceeds a certain level, the strength and binding performance of the binder are affected, and the adhesion between the active material and the current collector in the battery is affected, adversely affecting various performances of the battery.

In the above solution, with the swelling rate of the binder limited to 5% to 50%, particularly 10% to 30%, a binder with a moderate swelling rate can achieve good adhesion effects and high strength, thereby effectively suppressing the swelling of the negative electrode plate 121 and further reducing the likelihood of powder shedding and demolding in the negative electrode plate 121.

It should be noted that the swelling rate of the binder may be 5%, 10%, 20%, 40%, or any value within a range defined by these values.

In some implementations, a glass transition temperature of the binder is - 20°C to 60°C, and optionally, the glass transition temperature of the binder is -10°C to 40°C.

The glass transition temperature refers to a temperature at which glassy state transitions to a highly elastic state. An excessively high glass transition temperature leads to brittleness in the negative electrode plate 121, resulting in demolding and powder shedding in the negative electrode plate 121 during battery cycling.

In the above solution, maintaining the glass transition temperature of the binder at -20°C to 60°C, particularly at -10°C to 40°C, can further reduce the brittleness of the negative electrode plate 121.

It should be noted that the glass transition temperature of the binder may be -10°C, 10°C, 25°C, 40°C, or any value within a range defined by these values.

In some implementations, an elongation at break of the binder is 50% to 400%, and optionally, the elongation at break of the binder is 100% to 200%.

The elongation at break refers to a percentage of an increase in original gauge length of a material upon tensile fracture to the original gauge length.

For the binder, during the repeated swelling of the negative electrode plate 121, a binder with a certain elongation at break can suppress the swelling of the negative electrode plate 121, thereby reducing cracking or powder shedding in the negative electrode plate 121.

In the above solution, setting the elongation at break of the binder to 50% to 400%, particularly 100% to 200%, allows the binder to exhibit strong deformation resistance.

It should be noted that the elongation at break of the binder may be 50%, 100%, 200%, 350%, or any value within a range defined by these values.

In some implementations, based on 100 parts by weight of the negative electrode film layer 123, a weight portion of the binder is 1 to 10 parts by weight, optionally, the weight portion of the binder is 2 to 8 parts by weight.

In the above solution, to reduce demolding and powder shedding in the negative electrode plate 121, a binder with a relatively large median particle size by volume is added into the negative electrode film layer 123, so that the binder fills the larger pores in the negative electrode active material. Setting the weight proportion of the binder in the negative electrode film layer 123 to 1% to 10%, particularly 2% to 8%, can enhance the adhesion between negative electrode active materials to suppress volume swelling of the negative electrode plate 121, and can also reduce the decrease in battery energy density caused by excessive binder content.

It should be noted that based on 100 parts by weight of the negative electrode film layer 123, the weight portion of the binder may be 1 part by weight, 5 parts by weight, 6 parts by weight, 8 parts by weight, or any value within a range defined by these values.

In a possible implementation, the binder includes at least one of styrene-butadiene and a modified product thereof, styrene-acrylic and a modified product thereof, polyurethane and a modified product thereof, polyvinylidene fluoride and a modified product thereof, or acrylate and a modified product thereof.

In the embodiments of this application, at least one of styrene-butadiene and a modified product thereof, styrene-acrylic and a modified product thereof, polyurethane and a modified product thereof, polyvinylidene fluoride and a modified product thereof, or acrylate and a modified product thereof, which have good adhesion, is used as the binder, helping further improve the adhesion between the negative electrode active material and the negative electrode current collector 122.

In a possible implementation, the silicon-based material includes at least one of a silicon-oxygen material or a silicon-carbon material; optionally, the silicon-oxygen material includes SiOₓ, where 0.4≤x≤1.6; and optionally, the silicon-carbon material includes a silicon-carbon composite, and based on a total mass of the silicon-carbon composite, a ratio of a mass proportion B of carbon element to a mass proportion A of silicon element in the silicon-carbon composite is 1.3≤B/A≤2.

It should be noted that a silicon-oxygen material refers to a compound of silicon element and oxygen element; and a silicon-carbon material refers to a compound of silicon element and carbon element.

In the above solution, a silicon-based material, particularly a silicon-oxygen material or a silicon-carbon material, is added to the negative electrode active material, helping increase the energy density of the battery. The silicon-oxygen material in the silicon-based material not only has high theoretical capacity and excellent stability but also offers advantages such as low cost, non-toxicity, and environmental friendliness. The silicon-carbon material has relatively high theoretical capacity and good cycling performance. Through the use of a silicon-oxygen material, particularly SiOₓ where 0.4≤x≤1.6, or a silicon-carbon material with a ratio of a mass proportion A of silicon element in the silicon-carbon composite to a mass proportion B of carbon element in the silicon-carbon composite of 1.3≤B/A≤2, the battery performance can be further improved.

It should be noted that in the silicon-carbon material, the mass ratio of carbon element to silicon element, B/A, may be 1.3, 1.5, 1.7, 3, or any value within a range defined by these values.

In some implementations, the negative electrode active material further includes graphite; where based on 100 parts by weight of the negative electrode film layer 123, a weight portion of graphite is 45 to 70 parts by weight, and optionally, the weight portion of graphite is 55 to 65 parts by weight.

Since the silicon-based material has high theoretical capacity but poor conductivity, if only the silicon-based material is used as the negative electrode active material of the battery, the battery has poor conductivity. In the above solution, graphite with good conductivity is added to the negative electrode active material, and the weight proportion of graphite in the negative electrode film layer 123 is set to 45% to 70%, particularly 55% to 65%, maintaining good cycling performance for the battery.

It should be noted that based on 100 parts by weight of the negative electrode film layer 123, the weight portion of graphite may be 50 parts by weight, 58 parts by weight, 65 parts by weight, 72 parts by weight, or any value within a range defined by these values.

In some implementations, a compacted density of the negative electrode plate 121 is 1.0 g/cm³ to 2.5 g/cm³, and optionally, the compacted density of the negative electrode plate 121 is 1.2 g/cm³ to 1.8 g/cm³.

In the above solution, the compacted density of the negative electrode plate 121 is set to 1.0 g/cm³ to 2.5 g/cm³, particularly 1.2 g/cm³ to 1.8 g/cm³, further improving the energy density of the battery.

It should be noted that the compacted density of the negative electrode plate 121 may be 1 g/cm³, 1.5 g/cm³, 2.2 g/cm³, 2.5 g/cm³, or any value within a range defined by these values.

In some implementations, a thickness d₁ of the negative electrode plate 121 is 60 µm to 150 µm, and optionally, the thickness d₁ of the negative electrode plate 121 is 90 µm to 130 µm.

In the above solution, the thickness d₁ of the negative electrode plate 121 is set to 60 µm to 150 µm, particularly 90 µm to 130 µm, further improving the energy density of the battery.

It should be noted that the thickness d₁ of the negative electrode plate 121 may be 60 µm, 80 µm, 100 µm, 120 µm, or any value within a range defined by these values.

In some implementations, the negative electrode current collector 122 may be a metal foil or a composite current collector. For example, as a metal foil, copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some implementations, the negative electrode active material may further include a negative electrode active material known in the art used for batteries. For example, in addition to the silicon-based material, the negative electrode active material may include at least one of the following materials: artificial graphite, natural graphite, soft carbon, hard carbon, tin-based materials, lithium titanate, and the like. The tin-based material may be selected from at least one of elemental tin, tin oxide compound, or tin alloy. Additionally, the silicon-based material may be selected from at least one of elemental silicon, silicon oxide compound, silicon-carbon composite, silicon-nitrogen composite, or silicon alloy. However, this application is not limited to these materials, and other conventional materials that can be used as negative electrode active materials for batteries may also be used. One type of these negative electrode active materials may be used alone, or two or more types may be used in combination.

In some implementations, the binder may be selected from at least one of styrene-butadiene rubber (SBR), polyurethane (PU), nitrile rubber (NBR), polyvinylidene fluoride (PVDF), or styrene-acrylic emulsion (SAR).

In some implementations, the negative electrode film layer 123 further optionally includes a conductive agent. The conductive agent may be selected from at least one of superconducting carbon, acetylene black, carbon black, Ketjen black, carbon dots, carbon nanotubes, graphene, or carbon nanofibers.

In some implementations, the negative electrode film layer 123 further optionally includes another auxiliary agent, such as a thickener (for example, sodium carboxymethyl cellulose (CMC-Na)).

In some implementations, the negative electrode plate 121 may be prepared as follows: dispersing components used for preparing the negative electrode plate 121, such as the negative electrode active material, conductive agent, binder, and any other components, in a solvent (for example, deionized water) to produce a negative electrode slurry; and applying the negative electrode slurry onto the negative electrode current collector 122, followed by processes such as drying and cold pressing, to obtain the negative electrode plate 121.

### [Positive electrode plate]

The positive electrode plate includes a positive electrode current collector and a positive electrode film layer disposed on at least one surface of the positive electrode current collector, the positive electrode film layer including a positive electrode active material.

For example, the positive electrode current collector has two opposite surfaces in its thickness direction, and the positive electrode film layer is disposed on either or both of the two opposite surfaces of the positive electrode current collector.

In some implementations, the positive electrode active material includes Liₓ(NiₐCo_{b}Mn_{c})_{1-d}M_{d}O_{2-y}A_{y}, where M includes at least one of Zr, Al, B, Ta, Mo, W, Nb, Sb, or La, 0.2<x≤1.2, 0.5≤a<1.0, 0≤b<0.5, 0≤c<1, 0≤d<1, and 0≤y<0.02.

It should be noted that the positive electrode active material includes, but is not limited to, the following substances: Li_{0.5}Ni_{0.5}Co_{0.1}Mn_{0.4}O₂, Li_{0.5}(Ni_{0.3}Co_{0.1}Mn_{0.4})_{0.3}Zr_{0.3}O_{1.9}A_{0.1}, and LiNi_{0.4}Co_{0.3}Mn_{0.3}O₂.

It should be noted that in the positive electrode plate, battery, or electric apparatus, since lithium ions are consumed in processes such as formation and cycling of the battery, the measured lithium content in the positive electrode active material may be less than 1. If the positive electrode plate undergoes pre-lithiation, the measured lithium content in the positive electrode active material may be greater than 1 after processes such as formation and cycling of the battery.

Similarly, in the enumeration of positive electrode materials in this application, a molar content of O is only a theoretical value. Lattice oxygen release may cause variations in the molar content of oxygen, resulting in fluctuations in the actual molar content of O.

In some implementations, the positive electrode current collector may be a metal foil or a composite current collector. For example, as a metal foil, aluminum foil may be used. The composite current collector may include a polymer material base layer and a metal layer formed on at least one surface of the polymer material . The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some implementations, the positive electrode active material may alternatively be a positive electrode active material known in the art used for batteries. For example, the positive electrode active material may include at least one of the following materials: olivine-structured lithium-containing phosphate, lithium transition metal oxide, and respective modified compounds thereof. However, this application is not limited to these materials, and other conventional materials that can be used as positive electrode active materials for batteries may also be used. One type of these positive electrode active materials may be used alone, or two or more types may be used in combination. Examples of the lithium transition metal oxide may include, but are not limited to, at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), lithium nickel cobalt aluminum oxide (for example, LiNi_{0.85}Co_{0.15}Al_{0.05}O₂), and modified compounds thereof. Examples of the olivine-structured lithium-containing phosphate may include, but are not limited to, at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, or a composite material of lithium manganese iron phosphate and carbon.

In some implementations, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In some implementations, the positive electrode film layer further optionally includes a conductive agent. For example, the conductive agent may include at least one of superconducting carbon, acetylene black, carbon black, Ketjen black, carbon dots, carbon nanotubes, graphene, or carbon nanofibers.

In some implementations, the positive electrode plate may be prepared as follows: dispersing components used for preparing the positive electrode plate, such as the positive electrode active material, conductive agent, binder, and any other components, in a solvent (for example, N-methylpyrrolidone) to produce a positive electrode slurry; and applying the positive electrode slurry onto the positive electrode current collector, followed by processes such as drying and cold pressing, to obtain the positive electrode plate.

### [Electrolyte]

The electrolyte serves to conduct ions between the positive electrode plate and the negative electrode plate 121. This application imposes no specific restrictions on the type of the electrolyte, which can be selected based on requirements. For example, the electrolyte may be in a liquid state, a gel state, or an all-solid state.

In some implementations, the electrolyte is an electrolytic solution. The electrolytic solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, or lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone.

In some implementations, the electrolytic solution further optionally includes an additive. For example, the additive may include a negative electrode film-forming additive, a positive electrode film-forming additive, and an additive capable of improving some battery performance, such as an additive for improving overcharge protection performance of the battery, or an additive for improving high-temperature or low-temperature performance of the battery.

### [Separator]

In some implementations, the battery cell further includes a separator. This application imposes no particular restrictions on the type of the separator, and any known porous structure separator with good chemical and mechanical stability may be used.

In some implementations, a material of the separator may be selected from at least one of glass fiber, non-woven fabric, polyethylene, polypropylene, or polyvinylidene fluoride. The separator may be a single-layer film or a multilayer composite film, which is not particularly limited. When the separator is a multilayer composite film, materials of the layers may be the same or different, which is not particularly limited.

In some implementations, the positive electrode plate, negative electrode plate, and separator may be made into an electrode assembly through a winding process or a lamination process.

In some implementations, the battery cell may include an outer packaging. The outer packaging may be used to package the electrode assembly and electrolyte.

In some implementations, the outer packaging of the battery cell may be a hard shell, such as a hard plastic shell, an aluminum shell, or a steel shell. The outer packaging of the battery cell may alternatively be a soft pack, such as a soft pouch. A material of the soft pack may be plastic. As the plastic, polypropylene, polybutylene terephthalate, polybutylene succinate, and the like may be listed.

This application imposes no particular restrictions on the shape of the battery cell, which may be cylindrical, prismatic, or any other shape. For example, FIG. 2 is a schematic diagram of a battery cell according to an embodiment of this application.

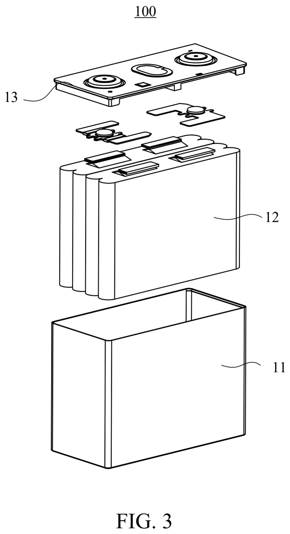

FIG. 3 is a schematic structural diagram of a battery cell according to an embodiment of this application. As shown in FIG. 3, an outer packaging of the battery cell 100 includes a housing 11 and a cover plate 13. The housing 11 may include a bottom plate and side plates connected to the bottom plate, where the bottom plate and side plates enclose an accommodating cavity. The housing 11 has an opening communicating with the accommodating cavity, and the cover plate 13 can cover the opening to close the accommodating cavity. The positive electrode plate, negative electrode plate 121, and separator may be made into an electrode assembly 12 through a winding process or a lamination process. The electrode assembly 12 is packaged within the accommodating cavity. The electrolyte infiltrates the electrode assembly 12. One or more electrode assemblies 12 may be contained in the battery cell 100, and those skilled in the art may select the quantity based on specific practical requirements.

In some implementations, the battery cell 100 may be further assembled into a battery module, and the battery module may contain one or more battery cells 100. Those skilled in the art can select the specific quantity based on the application and capacity of the battery module.

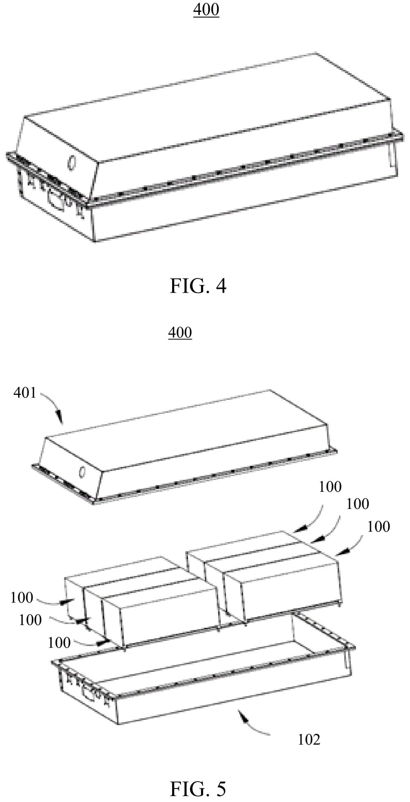

FIG. 4 is a schematic diagram of a battery according to an embodiment of this application, and FIG. 5 is a schematic structural diagram of a battery according to an embodiment of this application. Referring to FIG. 4 and FIG. 5, the battery 400 may include a battery box and multiple battery cells 100 disposed within the battery box. The battery box includes an upper box body 401 and a lower box body 402, where the upper box body 401 is capable of covering the lower box body 402 to create a closed space for accommodating the battery cells 100. The multiple battery cells 100 may be arranged in the battery box in any manner.

Additionally, this application further provides an electric apparatus, where the electric apparatus includes at least one of the negative electrode plate 121, battery cell 100, or battery 400 provided in this application. The negative electrode plate 121, battery cell 100, or battery 400 may be used as a power source of the electric apparatus, or may be used as an energy storage unit of the electric apparatus. The electric apparatus may include a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, an energy storage system, and the like, but is not limited thereto.

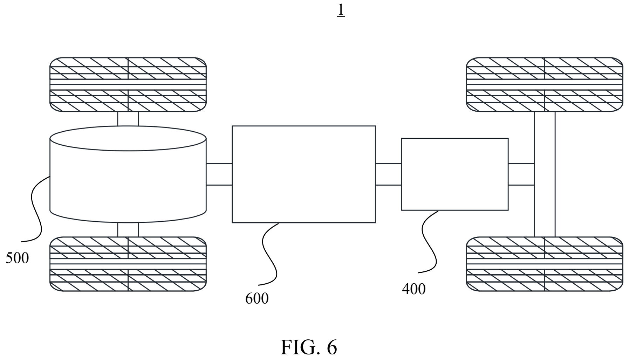

For example, FIG. 6 is a schematic structural diagram of an electric apparatus according to an embodiment of this application. As shown in FIG. 6, the electric apparatus is a vehicle 1. The vehicle 1 may be a fuel vehicle, a gas vehicle, a new energy vehicle, or the like. The new energy vehicle may be a battery electric vehicle, a hybrid electric vehicle, an extended-range vehicle, or the like. A motor 500, a controller 600, and a battery 400 may be disposed inside the vehicle 1, where the controller 600 is configured to control the battery 400 to supply power to the motor 500. For example, the battery 400 may be disposed at the bottom, front, or rear of the vehicle 1. The battery 400 may be configured to supply power to the vehicle 1. For example, the battery 400 may be used as an operational power source for the vehicle 1 that is configured for a circuit system of the vehicle 1, for example, to satisfy power needs of start, navigation, and running of the vehicle 1. In another embodiment of this application, the battery 400 may be used as not only the operational power source for the vehicle 1, but also as a driving power source for the vehicle 1, replacing or partially replacing fossil fuel or natural gas to provide driving traction for the vehicle 1.

For the electric apparatus, the negative electrode plate 121, battery cell 100, or battery 400 may be selected based on its usage requirements.

The electric apparatus may be a battery electric vehicle, a hybrid electric vehicle, a plug-in hybrid electric vehicle, or the like. To meet the high power and high energy density requirements of the electric apparatus for batteries, the battery cell 100 or the battery 400 may be used.

In another example, the apparatus may be a mobile phone, a tablet computer, a laptop computer, or the like. Such apparatus is typically required to be thin and light, and the battery cell 100 may be used as a power source.

### [Examples]

The following describes the examples of this application. The examples described below are exemplary and intended only to explain this application, not to be construed as limiting the application. Examples whose technical solutions or conditions are not specified are made in accordance with technical solutions or conditions described in literature in the field or made in accordance with product instruction. Reagents or instruments without specified manufacturers are conventional products available commercially.

### [Example 1]

### (1) Preparation of lithium-ion battery

(1.1) Preparation of negative electrode plate:
   (1.11) Preparation of silicon-carbon material: A gas containing a silicon precursor was provided to carbon matrix particles with a carbon skeleton, and silicon nanoparticles attached to the carbon skeleton were generated by the silicon precursor through chemical vapor deposition, to obtain the carbon-silicon composite material (hereinafter referred to as the silicon-carbon material).
   (1.12) Preparation of binder: A portion of the emulsifier, a portion of the acrylate monomer, and a portion of the styrene monomer were mixed with water to prepare a pre-emulsion; another portion of the emulsifier, another portion of the acrylate monomer, and another portion of the styrene monomer were mixed with water, and an initiator was added to initiate polymerization to prepare a seed emulsion; and the pre-emulsion was added dropwise to the seed emulsion, and an initiator was added for polymerization reaction to obtain a styrene-acrylic emulsion with a particle size Dᵥ50 of latex spheres ranging from 100 nm to 900 nm. A total mass of the emulsifier is 0.7% to 5% of a total mass of the preparation monomers, optionally 1% to 4.5%; and the preparation monomers include acrylate monomers and styrene monomers. Based on the total mass of the preparation monomers, the styrene-acrylic emulsion includes, by mass percentage, 30% to 80% styrene monomers, 20% to 70% acrylate monomers, and 0% to 10% functional monomers. The functional monomer methacrylic acid was added during the preparation of the pre-emulsion and/or seed emulsion.
   (1.13) Preparation of negative electrode plate: The first active material artificial graphite, the second active material silicon-carbon material, the conductive agent acetylene black, the conductive agent single-walled CNT, the binder styrene-acrylic emulsion, and the thickener CMC-Na were mixed in a weight ratio of 64.4%:30%:1%:0.1%:3.5%:1% in an appropriate amount of deionized water solvent system and thoroughly stirred to obtain the negative electrode active material, and the negative electrode active material was applied onto Cu foil, followed by drying, cold pressing, and slitting to obtain the negative electrode plate. The binder styrene-acrylic emulsion contains the functional group carboxyl, and the binder has a weight portion of 3.5 parts by weight, a median particle size by volume Dᵥ50 of 0.45 µm, a degree of crosslinking of 80, a swelling rate of 25%, a glass transition temperature of 20°C, and an elongation at break of 100%.
(1.2) Preparation of positive electrode plate: The positive electrode active material lithium nickel cobalt manganese oxide (LiNi_{0.6}Co_{0.2}Mn_{0.2}O₂), the conductive agent carbon nanotubes (CNT), and the binder polyvinylidene fluoride (PVDF) were dissolved at a weight ratio of 96%:2%:2% in the solvent N-methylpyrrolidone (NMP), and thoroughly stirred and mixed to prepare the positive electrode active material, and the positive electrode active material was applied onto Al foil, followed by drying, cold pressing, and slitting to obtain the positive electrode plate.
(1.3) Preparation of separator: A PE porous polymer film was used as the separator.
(1.4) Electrolyte: EC/EMC/DMC were dissolved in 1M LiPF₆ at a volume ratio of 1:1:1 and stirred to uniformity.
(1.5) Assembly: The positive electrode plate, separator, and negative electrode plate were stacked in sequence, with the separator sandwiched between the positive and negative electrodes to provide separation. The resulting stack was wound to obtain an electrode assembly, followed by electrolyte injection. Subsequently, hot pressing was performed at 100°C and 250 MPa for 2 minutes to obtain the lithium-ion battery.

### [Example 2]

The preparation method of the lithium-ion battery in Example 2 is substantially the same as that in Example 1, except that the median particle size by volume Dᵥ50 of the binder in the negative electrode plate in Example 2 is 0.3 µm.

### [Example 3]

The preparation method of the lithium-ion battery in Example 3 is substantially the same as that in Example 1, except that the median particle size by volume Dᵥ50 of the binder in the negative electrode plate in Example 3 is 0.35 µm.

### [Example 4]

The preparation method of the lithium-ion battery in Example 4 is substantially the same as that in Example 1, except that the median particle size by volume Dᵥ50 of the binder in the negative electrode plate in Example 4 is 0.5 µm.

### [Example 5]

The preparation method of the lithium-ion battery in Example 5 is substantially the same as that in Example 1, except that the median particle size by volume Dᵥ50 of the binder in the negative electrode plate in Example 5 is 0.7 µm.

### [Example 6]

The preparation method of the lithium-ion battery in Example 6 is substantially the same as that in Example 1, except that the degree of crosslinking of the binder in the negative electrode plate in Example 6 is 50.

### [Example 7]

The preparation method of the lithium-ion battery in Example 7 is substantially the same as that in Example 1, except that the degree of crosslinking of the binder in the negative electrode plate in Example 7 is 85.

### [Example 8]

The preparation method of the lithium-ion battery in Example 8 is substantially the same as that in Example 1, except that the degree of crosslinking of the binder in the negative electrode plate in Example 8 is 98.

### [Example 9]

The preparation method of the lithium-ion battery in Example 9 is substantially the same as that in Example 1, except that the degree of crosslinking of the binder in the negative electrode plate in Example 9 is 100.

### [Example 10]

The preparation method of the lithium-ion battery in Example 10 is substantially the same as that in Example 1, except that the swelling rate of the binder in the negative electrode plate in Example 10 is 5%.

### [Example 11]

The preparation method of the lithium-ion battery in Example 11 is substantially the same as that in Example 1, except that the swelling rate of the binder in the negative electrode plate in Example 11 is 10%.

### [Example 12]

The preparation method of the lithium-ion battery in Example 12 is substantially the same as that in Example 1, except that the swelling rate of the binder in the negative electrode plate in Example 12 is 50%.

### [Example 13]

The preparation method of the lithium-ion battery in Example 13 is substantially the same as that in Example 1, except that the swelling rate of the binder in the negative electrode plate in Example 13 is 80%.

### [Example 14]

The preparation method of the lithium-ion battery in Example 14 is substantially the same as that in Example 1, except that the glass transition temperature of the binder in the negative electrode plate in Example 14 is -20°C.

### [Example 15]

The preparation method of the lithium-ion battery in Example 15 is substantially the same as that in Example 1, except that the elongation at break of the binder in the negative electrode plate in Example 15 is 60°C.

### [Example 16]

The preparation method of the lithium-ion battery in Example 16 is substantially the same as that in Example 1, except that the glass transition temperature of the binder in the negative electrode plate in Example 16 is 200%.

### [Example 17]

The preparation method of the lithium-ion battery in Example 17 is substantially the same as that in Example 1, except that the glass transition temperature of the binder in the negative electrode plate in Example 17 is 50%.

### [Example 18]

The preparation method of the lithium-ion battery in Example 18 is substantially the same as that in Example 1, except that the glass transition temperature of the binder in the negative electrode plate in Example 18 is 400%.

### [Example 19]

The preparation method of the lithium-ion battery in Example 19 is substantially the same as that in Example 1, except that the weight portion of the binder in the negative electrode plate in Example 19 is 1 part by weight, that is, the mass ratio of the first active material artificial graphite, the second active material silicon-carbon material, the conductive agent acetylene black, the conductive agent single-walled CNT, the binder styrene-acrylic emulsion (SAR), and the thickener CMC-Na is 66.9%:30%:1%:0.1%:1%:1%.

### [Example 20]

The preparation method of the lithium-ion battery in Example 20 is substantially the same as that in Example 1, except that the weight portion of the binder in the negative electrode plate in Example 20 is 2 parts by weight, that is, the mass ratio of the first active material artificial graphite, the second active material silicon-carbon material, the conductive agent acetylene black, the conductive agent single-walled CNT, the binder styrene-acrylic emulsion (SAR), and the thickener CMC-Na is 65.9%:30%: 1 %:0.1 %:2%: 1 %.

### [Example 21]

The preparation method of the lithium-ion battery in Example 21 is substantially the same as that in Example 1, except that the weight portion of the binder in the negative electrode plate in Example 21 is 6 parts by weight, that is, the mass ratio of the first active material artificial graphite, the second active material silicon-carbon material, the conductive agent acetylene black, the conductive agent single-walled CNT, the binder styrene-acrylic emulsion (SAR), and the thickener CMC-Na is 61.9%:30%:1%:0.1%:6%:1%.

### [Example 22]

The preparation method of the lithium-ion battery in Example 22 is substantially the same as that in Example 1, except that the weight portion of the binder in the negative electrode plate in Example 22 is 8 parts by weight, that is, the mass ratio of the first active material artificial graphite, the second active material silicon-carbon material, the conductive agent acetylene black, the conductive agent single-walled CNT, the binder styrene-acrylic emulsion (SAR), and the thickener CMC-Na is 59.9%:30%:1%:0.1%:8%:1%.

### [Example 23]

The preparation method of the lithium-ion battery in Example 23 is substantially the same as that in Example 1, except that the binder in the negative electrode plate in Example 23 is a polyurethane emulsion.

### [Example 24]

The preparation method of the lithium-ion battery in Example 24 is substantially the same as that in Example 1, except that the binder in the negative electrode plate in Example 24 is a nitrile rubber emulsion.

### [Example 25]

The preparation method of the lithium-ion battery in Example 25 is substantially the same as that in Example 1, except that the binder in the negative electrode plate in Example 25 contains a hydroxyl group.

### [Example 26]

The preparation method of the lithium-ion battery in Example 26 is substantially the same as that in Example 1, except that the binder in the negative electrode plate in Example 26 contains an amino group.

### [Example 27]

The preparation method of the lithium-ion battery in Example 27 is substantially the same as that in Example 1, except that the binder in the negative electrode plate in Example 27 contains a cyano group.

### [Example 28]

The preparation method of the lithium-ion battery in Example 28 is substantially the same as that in Example 1, except that the median particle size by volume Dᵥ50 of the binder in the negative electrode plate in Example 28 is 1 µm.

### [Example 29]

The preparation method of the lithium-ion battery in Example 29 is substantially the same as that in Example 1, except that the median particle size by volume Dᵥ50 of the binder in the negative electrode plate in Example 29 is 0.1 µm.

### [Example 30]

The preparation method of the lithium-ion battery in Example 30 is substantially the same as that in Example 1, except that the median particle size by volume Dᵥ50 of the binder in the negative electrode plate in Example 30 is 0.8 µm.

### [Comparative Example 1]

The preparation method of the lithium-ion battery in Comparative Example 1 is substantially the same as that in Example 1, except that the binder in the negative electrode plate in Comparative Example 1 does not contain functional groups.

### [Comparative Example 2]

The preparation method of the lithium-ion battery in Comparative Example 2 is substantially the same as that in Example 1, except that the binder in the negative electrode plate in Comparative Example 2 contains a hydroxyl group.

### [Comparative Example 3]

The preparation method of the lithium-ion battery in Comparative Example 3 is substantially the same as that in Example 1, except that the median particle size by volume Dᵥ50 of the binder in the negative electrode plate in Comparative Example 3 is 1 µm.

### [Comparative Example 4]

The preparation method of the lithium-ion battery in Comparative Example 4 is substantially the same as that in Example 1, except that the median particle size by volume Dᵥ50 of the binder in the negative electrode plate in Comparative Example 4 is 5 µm.

### [Comparative Example 5]

The preparation method of the lithium-ion battery in Comparative Example 5 is substantially the same as that in Example 1, except that the median particle size by volume Dᵥ50 of the binder in the negative electrode plate in Comparative Example 5 is 0.2 µm.

### (2) Performance characterization for negative electrode plate of lithium-ion battery

(2.1) Measurement of median particle size by volume Dᵥ50: The test was conducted using a laser particle size analyzer (for example, Master Size 3000) according to GB/T 19077-2016 particle size distribution laser diffraction method.
(2.2) Measurement of degree of crosslinking: The test was conducted according to GB/T 36965-2018 or IEC 60811-507-2012 standards.
(2.3) Measurement of swelling rate: 20 g of sample was weighed and added into a polytetrafluoroethylene petri dish, which was then placed in an oven at 100°C to dry to constant weight; the dry film was cut into 20 mm×80 mm, and the weight of sample was weighed and recorded as W0; the dry film was placed in a plastic bottle containing the electrolyte and immersed at a constant temperature of 60°C, and the mass was measured at intervals of 12 h, 24 h, 36 h, 48 h, 60 h, and 72 h and recorded as W1, W2, W3, W4, W5, and W6, respectively; the swelling rate at different durations was calculated according to the formula: (Wn-WO)/WO×100%.
(2.4) Measurement of glass transition temperature: The glass transition temperature was determined using a differential scanning calorimeter according to the standard ISO 11357-2:1999 Determination of glass transition temperature.
(2.5) Measurement of elongation at break
   (2.51) Preparation of adhesive film:
      1. Pretreatment: The sample was poured into a 1 L beaker, sealed with cling film, and left stand for more than 24 hours to eliminate bubbles. 2. Coating method: The binder was poured into a 280 mm×160 mm×3 mm acrylic trough for blade coating, and left standing at room temperature for 30 minutes (to remove bubbles). 3. Oven drying: The binder was placed in a vacuum oven for drying at 60°C (the tray in the oven needs to be leveled with a leveler) for 12 hours to form a film. 4. Film removal: After film formation, the trough was placed in an environment with a humidity less than or equal to 60% for more than 12 hours to dilute, and then the film was peeled off.
   (2.52) Tensile test of adhesive film:
      1. Film sample preparation: The adhesive film was cut into 150 mm×20 mm strips.
      2. Sample selection: The adhesive film strips with a uniform thickness within 50 mm longitudinally (cov < 3.0%) and no bubbles were selected.
      3. Tensile testing: A tensile testing device was used to stretch the prepared adhesive film at a speed of 10 mm/min until fracture; and the elongation at break was calculated from the tensile displacement.
(2.6) Measurement of compacted density: Reference may be made to GB/T 24533-2009. A certain amount of powder was taken and placed in a dedicated compaction mold, then the mold was placed on a compacted density instrument, the weight m of the powder was weighed, the pressure was set to 400 kN, the thickness (the thickness obtained after pressure release) and the volume v of the powder were read from the instrument, and the compacted density was calculated according to ρ=m/v.
(2.7) Detection of functional groups: The test was performed through infrared spectroscopy. For details, refer to GB/T 6040-2019.

**Table 1 Parameters of binders in Examples 1 to 30 and Comparative Examples 1 to 5**

| Group | Functional group contained in binder | Dᵥ50 (µm) | Degree of crosslinking | Swelling rate | Glass transition temperature | Elongation at break | Parts by weight | Type |
|---|---|---|---|---|---|---|---|---|
| Example 1 | carboxyl | 0.45 | 80 | 25% | 20°C | 100% | 3.5 | styrene-acrylic emulsion |
| Example 2 | carboxyl | 0.3 | 80 | 25% | 20°C | 100% | 3.5 | styrene-acrylic emulsion |
| Example 3 | carboxyl | 0.35 | 80 | 25% | 20°C | 100% | 3.5 | styrene-acrylic emulsion |
| Example 4 | carboxyl | 0.5 | 80 | 25% | 20°C | 100% | 3.5 | styrene-acrylic emulsion |
| Example 5 | carboxyl | 0.7 | 80 | 25% | 20°C | 100% | 3.5 | styrene-acrylic emulsion |
| Example 6 | carboxyl | 0.45 | 50 | 25% | 20°C | 100% | 3.5 | styrene-acrylic emulsion |
| Example 7 | carboxyl | 0.45 | 85 | 25% | 20°C | 100% | 3.5 | styrene-acrylic emulsion |
| Example 8 | carboxyl | 0.45 | 98 | 25% | 20°C | 100% | 3.5 | styrene-acrylic emulsion |
| Example 9 | carboxyl | 0.45 | 100 | 25% | 20°C | 100% | 3.5 | styrene-acrylic emulsion |
| Example 10 | carboxyl | 0.45 | 80 | 5% | 20°C | 100% | 3.5 | styrene-acrylic emulsion |
| Example 11 | carboxyl | 0.45 | 80 | 10% | 20°C | 100% | 3.5 | styrene-acrylic emulsion |
| Example 12 | carboxyl | 0.45 | 80 | 50% | 20°C | 100% | 3.5 | styrene-acrylic emulsion |
| Example 13 | carboxyl | 0.45 | 80 | 80% | 20°C | 100% | 3.5 | styrene-acrylic emulsion |
| Example 14 | carboxyl | 0.45 | 80 | 25% | -20°C | 100% | 3.5 | styrene-acrylic emulsion |
| Example 15 | carboxyl | 0.45 | 80 | 25% | 60°C | 100% | 3.5 | styrene-acrylic emulsion |
| Example 16 | carboxyl | 0.45 | 80 | 25% | 20°C | 200% | 3.5 | styrene-acrylic emulsion |
| Example 17 | carboxyl | 0.45 | 80 | 25% | 20°C | 50% | 3.5 | styrene-acrylic emulsion |
| Example 18 | carboxyl | 0.45 | 80 | 25% | 20°C | 400% | 3.5 | styrene-acrylic emulsion |
| Example 19 | carboxyl | 0.45 | 80 | 25% | 20°C | 100% | 1 | styrene-acrylic emulsion |
| Example 20 | carboxyl | 0.45 | 80 | 25% | 20°C | 100% | 2 | styrene-acrylic emulsion |
| Example 21 | carboxyl | 0.45 | 80 | 25% | 20°C | 100% | 6 | styrene-acrylic emulsion |
| Example 22 | carboxyl | 0.45 | 80 | 25% | 20°C | 100% | 8 | styrene-acrylic emulsion |
| Example 23 | carboxyl | 0.45 | 80 | 25% | 20°C | 100% | 3.5 | polyurethane emulsion |
| Example 24 | carboxyl | 0.45 | 80 | 25% | 20°C | 100% | 3.5 | nitrile rubber emulsion |
| Example 25 | hydroxyl | 0.45 | 80 | 25% | 20°C | 100% | 3.5 | styrene-acrylic emulsion |
| Example 26 | amino | 0.45 | 80 | 25% | 20°C | 100% | 3.5 | styrene-acrylic emulsion |
| Example 27 | cyano | 0.45 | 80 | 25% | 20°C | 100% | 3.5 | styrene-acrylic emulsion |
| Example 28 | carboxyl | 1 | 80 | 25% | 20°C | 100% | 3.5 | styrene-acrylic emulsion |
| Example 29 | carboxyl | 0.1 | 80 | 25% | 20°C | 100% | 3.5 | styrene-acrylic emulsion |
| Example 30 | carboxyl | 0.8 | 80 | 25% | 20°C | 100% | 3.5 | styrene-acrylic emulsion |
| Comparative Example 1 | / | 0.45 | 80 | 25% | 20°C | 100% | 3.5 | styrene-acrylic emulsion |
| Comparative Example 2 | carbonyl | 0.45 | 80 | 25% | 20°C | 100% | 3.5 | styrene-acrylic emulsion |
| Comparative Example 3 | / | 1 | 80 | 25% | 20°C | 100% | 3.5 | styrene-acrylic emulsion |
| Comparative Example 4 | / | 5 | 80 | 25% | 20°C | 100% | 3.5 | styrene-acrylic emulsion |
| Comparative Example 5 | / | 0.2 | 80 | 25% | 20°C | 100% | 3.5 | styrene-acrylic emulsion |

### (3) Performance characterization of lithium-ion battery

(3.1) Cycling performance test: At 45°C, the battery was cycled within a charge-discharge voltage range of 2.5 V to 4.35 V at a current density of 1C, and the capacity retention rate of the battery after 200 cycles was recorded. The test results are shown in Table 2.
(3.2) Adhesion test of negative electrode plate: A sample with a width of 20 mm and a length of 100 mm to 160 mm was cut from the prepared negative electrode plate under test along a direction perpendicular to the machine direction (TD). A special double-sided tape with a tape width of 20 mm and a length of 90 mm to 150 mm was attached to a steel plate. After the electrode plate sample was attached to the double-sided tape, it was rolled three times in the same direction using a 2 kg hand roller. The adhesion of the electrode plate was tested using a tensile testing machine. A higher adhesion between the negative electrode film layer and the negative electrode current collector indicates a stronger interaction between the active substance in the negative electrode film layer and the current collector, while a lower adhesion indicates a weaker interaction between the active substance in the negative electrode film layer and the current collector.
(3.3) Cohesion test of negative electrode plate: A negative electrode plate sample with a width of 20 mm and a length of 100 mm was taken. The sample was attached to a double-sided tape, and a green tape with a width of 20 mm and a length of 120 mm was attached to the electrode plate sample. The portion of the green tape not in contact with the electrode plate was attached to a paper strip with a width of 20 mm and a length of 60 mm, with the paper strip and the green tape aligned in a straight line. The joint between the green tape and the paper strip was bonded with crepe tape. For the portion of the green tape in contact with the electrode plate, the electrode plate and the double-sided tape were evenly pressed before testing. The cohesion of the electrode plate was tested using a tensile testing machine. A higher force between active particles in the negative electrode film layer indicates a stronger interaction between the active substances in the negative electrode plate, while a lower force indicates a weaker interaction between the active substances in the electrode plate.

**Table 2 Performance test results for Examples 1 to 30 and Comparative Examples 1 to 5**

| Group | Adhesion (N/m) | Cohesion (N/m) | Cycling capacity retention rate |
|---|---|---|---|
| Example 1 | 38 | 470 | 91.10% |
| Example 2 | 32 | 421 | 90.53% |
| Example 3 | 37 | 474 | 91.12% |
| Example 4 | 31 | 416 | 90.46% |
| Example 5 | 25 | 384 | 89.47% |
| Example 6 | 26 | 354 | 88.68% |
| Example 7 | 41 | 497 | 91.40% |
| Example 8 | 39 | 483 | 91.11% |
| Example 9 | 24 | 335 | 89.89% |
| Example 10 | 23 | 350 | 89.93% |
| Example 11 | 31 | 421 | 90.50% |
| Example 12 | 40 | 495 | 91.34% |
| Example 13 | 26 | 374 | 89.01% |
| Example 14 | 38 | 468 | 91.12% |
| Example 15 | 25 | 345 | 88.79% |
| Example 16 | 37 | 433 | 91.02% |
| Example 17 | 36 | 429 | 90.93% |
| Example 18 | 36 | 415 | 90.33% |
| Example 19 | 23 | 332 | 90.00% |
| Example 20 | 43 | 504 | 91.55% |
| Example 21 | 50 | 522 | 92.18% |
| Example 22 | 57 | 546 | 92.37% |
| Example 23 | 36 | 468 | 90.90% |
| Example 24 | 37 | 473 | 91.03% |
| Example 25 | 39 | 480 | 91.50% |
| Example 26 | 37 | 465 | 91.20% |
| Example 27 | 36 | 468 | 90.80% |
| Example 28 | 25 | 340 | 89.1% |
| Example 29 | 23 | 326 | 89.90% |
| Example 30 | 24 | 350 | 90.30% |
| Comparative Example 1 | 22 | 314 | 87.89% |
| Comparative Example 2 | 20 | 301 | 86.35% |
| Comparative Example 3 | 19 | 280 | 85.75% |
| Comparative Example 4 | 15 | 267 | 82.44% |
| Comparative Example 5 | 21 | 322 | 87.39% |

In the examples of this application, adhesion represents a bonding strength between the negative electrode film layer and the negative electrode current collector. A higher adhesion value indicates a stronger interaction and better bonding between the negative electrode film layer and the negative electrode current collector, resulting in a lower probability of demolding of the negative electrode film layer. Cohesion represents a bonding strength between active materials in the negative electrode film layer. A higher cohesion indicates a tighter connection between the active materials in the negative electrode film layer, making powder less likely to shed. The cycling capacity retention rate at 45°C is used to represent the cycling performance of the battery. A higher capacity retention rate indicates a better cycling performance of the battery.

According to Examples 1 to 30 and Comparative Examples 1 to 5, it can be seen that when the binder includes at least one functional group selected from hydroxyl, carboxyl, amino, acrylamide, or cyano, the negative electrode plate can achieve both good adhesion and cohesion, thereby improving the cycling performance of the battery.

According to Examples 1 to 30 and Comparative Examples 3 to 5, it can be seen that adding a binder with a median particle size by volume Dᵥ50 of 0.1 µm to 0.8 µm to the negative electrode film layer enables the negative electrode plate to achieve both good adhesion and cohesion, and improves the cycling performance of the battery.

Further, according to Examples 1 to 5 and 28 to 30, it can be seen that adding a binder with a median particle size by volume Dᵥ50 of 0.3 µm to 0.7 µm, particularly 0.35 µm to 0.45 µm, to the negative electrode film layer helps further improve the adhesion and cohesion of the negative electrode plate and the cycling performance of the battery.

According to Examples 1 and 6 to 9, it can be seen that adding a binder with a degree of crosslinking not less than 50 to the negative electrode film layer enables the negative electrode plate to achieve good adhesion and cohesion, reducing demolding and powder shedding in the negative electrode plate, and providing the battery with good cycling performance. Further, maintaining the degree of crosslinking of the binder at 80 to 98 helps further improve the adhesion and cohesion of the negative electrode plate and the cycling performance of the battery.

According to Examples 1 and 10 to 13, it can be seen that maintaining the swelling rate of the binder added to the negative electrode film layer at 5% to 80% enables the negative electrode plate to achieve good adhesion and cohesion, and improves the cycling performance of the battery. Further, maintaining the swelling rate of the binder at 10% to 50% can further improve the adhesion and cohesion of the negative electrode plate and the cycling performance of the battery.

According to Examples 1, 14, and 15, it can be seen that adding a binder with a glass transition temperature of -20°C to 60°C to the negative electrode film layer enables the negative electrode plate to achieve good adhesion and cohesion, and improves the cycling performance of the battery.

According to Examples 1 and 16 to 18, it can be seen that adding a binder with an elongation at break of 50% to 400%, particularly 100% to 200%, to the negative electrode film layer can improve the adhesion and cohesion of the negative electrode plate and the cycling performance of the battery.

According to Examples 1 and 19 to 22, it can be seen that when the weight portion of the binder in the negative electrode film layer is set to not less than 1 part by weight, particularly to 2 to 8 parts by weight, the adhesion and cohesion of the negative electrode plate and the cycling performance of the battery can all be improved.

According to Examples 1, 23, and 24, it can be seen that multiple binders can be applied to the technical solutions of this application.

According to Examples 1 and 25 to 27, it can be seen that multiple functional groups can be applied to the technical solutions of this application.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A negative electrode plate, **characterized by** comprising:
a negative electrode current collector and a negative electrode film layer disposed on at least one side of the negative electrode current collector; wherein
the negative electrode film layer comprises a negative electrode active material and a binder, wherein the negative electrode active material comprises a silicon-based material; and
the binder comprises at least one of the following functional groups: hydroxyl, carboxyl, amino, cyano, ester, or vinyl.

2. The negative electrode plate according to claim 1, **characterized in that**
a median particle size by volume Dᵥ50 of the binder is 0.1 µm to 0.8 µm.

3. The negative electrode plate according to claim 1, **characterized in that**
a median particle size by volume Dᵥ50 of the binder is 0.3 µm to 0.7 µm.

4. The negative electrode plate according to claim 1, **characterized in that**
a median particle size by volume Dᵥ50 of the binder is 0.35 µm to 0.45 µm.

5. The negative electrode plate according to claim 1, **characterized in that**
a median particle size by volume Dᵥ50 of the binder is 0.5 µm to 0.7 µm.

6. The negative electrode plate according to any one of claims 1 to 5, **characterized in that** a degree of crosslinking of the binder is 50 to 100.

7. The negative electrode plate according to any one of claims 1 to 5, **characterized in that** a degree of crosslinking of the binder is 80 to 98.

8. The negative electrode plate according to any one of claims 1 to 7, **characterized in that** a swelling rate of the binder is 5% to 80%.

9. The negative electrode plate according to any one of claims 1 to 7, **characterized in that** a swelling rate of the binder is 10% to 50%.

10. The negative electrode plate according to any one of claims 1 to 9, **characterized in that** a glass transition temperature of the binder is -20°C to 60°C.

11. The negative electrode plate according to any one of claims 1 to 9, **characterized in that** a glass transition temperature of the binder is -10°C to 40°C.

12. The negative electrode plate according to any one of claims 1 to 11, **characterized in that** an elongation at break of the binder is 50% to 400%.

13. The negative electrode plate according to any one of claims 1 to 11, **characterized in that** an elongation at break of the binder is 100% to 200%.

14. The negative electrode plate according to any one of claims 1 to 13, **characterized in that** based on 100 parts by weight of the negative electrode film layer, a weight portion of the binder is 1 to 10 parts by weight.

15. The negative electrode plate according to any one of claims 1 to 14, **characterized in that** the binder comprises at least one of styrene-butadiene and a modified product thereof, styrene-acrylic and a modified product thereof, polyurethane and a modified product thereof, polyvinylidene fluoride and a modified product thereof, or acrylate and a modified product thereof.

16. The negative electrode plate according to any one of claims 1 to 15, **characterized in that** the silicon-based material comprises at least one of a silicon-oxygen material or a silicon-carbon material.

17. The negative electrode plate according to any one of claims 1 to 16, **characterized in that**
the negative electrode active material further comprises graphite;
wherein based on 100 parts by weight of the negative electrode film layer, a weight portion of graphite is 45 to 70 parts by weight.

18. The negative electrode plate according to any one of claims 1 to 17, **characterized in that** a compacted density of the negative electrode plate is 1.0 g/cm³ to 2.5 g/cm³.

19. The negative electrode plate according to any one of claims 1 to 18, **characterized in that** a thickness of the negative electrode plate is 60 µm to 150 µm.

20. A battery cell, **characterized by** comprising the negative electrode plate according to any one of claims 1 to 19.

21. The battery cell according to claim 20, **characterized in that** the battery cell further comprises a positive electrode plate, wherein the positive electrode plate comprises a positive electrode current collector and a positive electrode film layer disposed on at least one side of the positive electrode current collector, the positive electrode film layer comprising a positive electrode active material.

22. The battery cell according to claim 21, **characterized in that** the positive electrode active material comprises Liₓ(NiₐCo_{b}Mn_{c})_{1-d}M_{d}O_{2-y}A_{y}, wherein M comprises at least one of Zr, Al, B, Ta, Mo, W, Nb, Sb, or La, 0.2<x≤1.2, 0.5≤a<1.0, 0≤b<0.5, 0≤c<1, 0≤d<1, 0≤y<0.02.

23. A battery, **characterized by** comprising the battery cell according to any one of claims 20 to 22.

24. An electric apparatus, **characterized by** comprising the battery according to claim 23.
